# EUROPEAN PATENT APPLICATION

(11) **EP 4 764 466 A1**
(43) Date of publication of application: **24.06.2026**
(21) Application number: 25851862.0
(22) Date of filing: 22.07.2025
(51) Int. Cl.: G01N 21/88, G06T 7/00, G06N 3/08, B23K 31/12

(54) **WELDING INSPECTION APPARATUS AND METHOD**

(30) Priority: 06.08.2024 KR 20240104524
(71) Applicant: LG Energy Solution, Ltd., Seoul 07335 (KR)
(72) Inventor: KIM, Minji, Daejeon 34122 (KR); KIM, Sungryul, Daejeon 34122 (KR); JUNG, Younghan, Daejeon 34122 (KR); EOM, Donghwan, Daejeon 34122 (KR)
(74) Representative: Goddar, Heinz J.
(86) International application number: PCT/KR2025/010793
(87) International publication number: WO 2026/034858

(57) **Abstract**

A welding inspection apparatus according to one embodiment of the present invention may comprise at least one processor, and a memory for storing at least one instruction that is executed using the at least one processor. Here, the at least one instruction can include the instructions of: collecting a welding image in which a welding portion is captured, and welding state data measured during welding; inputting the welding image into a pre-trained first diagnosis model, and inputting the welding state data into a pre-trained second diagnosis model; and outputting a final diagnosis result for the welding portion on the basis of a first diagnosis result diagnosed by the first diagnosis model and/or a second diagnosis result diagnosed by the second diagnosis model.

## Description

### [Technical Field]

This application claims priority to and the benefit of Korean Patent Application No.10-2024-0104524 filed in the Korean Intellectual Property Office on August 6, 2024 the entire contents of which are incorporated herein by reference.

The present invention relates to a welding inspection apparatus and method, and more particularly, to a welding inspection apparatus and method that uses an artificial intelligence-based diagnostic model to diagnose defects in a welded portion.

### [Background Art]

Secondary batteries, capable of recharging and reuse, may be used as an energy source for small devices such as mobile phones, tablet PCs and vacuum cleaners, and also used as an energy source for medium and large devices such as automobiles and an energy storage system (ESS) for smart grids.

Secondary batteries, capable of recharging and reuse, may be used as an energy source for small devices such as mobile phones, tablet PCs and vacuum cleaners, and also used as an energy source for medium and large devices such as personal mobility, automobiles and an energy storage system (ESS) for smart grids.

A cylindrical battery cell includes a battery can and a jelly-roll-shaped electrode assembly housed within the can. Here, electrode tabs, electrically connected to the electrode assembly, are welded to the inner surface of the battery can and weld marks may appear at the welded portion.

Typically, a destructive testing may be used for weld quality inspection, which determines the presence of weld defects based on the tensile force applied when forcibly removing the electrode tabs. In addition, a non-destructive testing may also be used, which determines the presence of weld defects based on physical quantities such as welding current, welding voltage, and resistance measured during the welding process, or based on images of the welded portion.

However, destructive testing methods face the disadvantage of impractical 100% inspection and require the disposal of inspection items. While non-destructive testing does not suffer from the drawbacks of destructive testing, it suffers from a high over-inspection rate, resulting in low inspection reliability.

Among the prior art documents relevant to the present invention, KR 10-2023-0021474 A is of some relevance.

### [Detailed Description of the Invention]

### [Technical Problem]

To obviate one or more problems of the related art, embodiments of the present disclosure provide a welding inspection apparatus that uses an artificial intelligence-based diagnostic model to diagnose defects in a welded portion.

To obviate one or more problems of the related art, embodiments of the present disclosure also provide a welding inspection method using the welding inspection apparatus.

To obviate one or more problems of the related art, embodiments of the present disclosure also provide a welding inspection system including the welding inspection apparatus.

### [Technical Solution]

In order to achieve the objective of the present disclosure, a welding inspection apparatus may include at least one processor; and a memory configured to store at least one instruction executed by the at least one processor.

Here, the at least one instruction may include an instruction to collect one or more weld images of a welded portion, and welding condition data measured during a welding process; an instruction to input a weld image into a pre-trained first diagnostic model and input the welding condition data into a pre-trained second diagnostic model; and an instruction to output a final diagnostic result for the welded portion based on one or more of a first diagnostic result from the first diagnostic model and a second diagnostic result from the second diagnostic model.

The weld image may include one or more images of the welded portion of an electrode tab captured after welding is completed.

The welding condition data may include one or more of welding current data, welding voltage data, dynamic resistance data, and welding device output voltage data.

The first diagnostic model may be configured to output one of normal, over-welding, and under-welding as a first diagnostic result when the weld image is input, and the second diagnostic model is configured to output one of normal, over-welding, and under-welding as a second diagnostic result when the welding condition data is input.

The instruction to output the final diagnostic result for the welded portion may include an instruction to identify the first diagnostic result by the first diagnostic model; and an instruction to output the final diagnostic result as over-welding, regardless of the second diagnostic result, if the first diagnostic result is over-welding.

The instruction to output the final diagnostic result for the welded portion may include an instruction to identify the first diagnostic result by the first diagnostic model; and an instruction to derive the final diagnostic result based on the first diagnostic result and the second diagnostic result, if the first diagnostic result is normal or under-welding.

The instruction to derive the final diagnostic result may include an instruction to apply a predefined first weight to the first diagnostic result and a predefined second weight to the second diagnostic result; and an instruction to determine the final diagnostic result based on a sum of the first diagnostic result to which the first weight is reflected and the second diagnostic result to which the second weight is reflected.

The sum of the first weight and the second weight may be defined as 1, and the second weight may be defined as 0.6 or greater and 0.9 or less.

According to another embodiment of the present disclosure, a welding inspection method, performed by a welding inspection apparatus, may include collecting one or more weld images of a welded portion, and welding condition data measured during a welding process; inputting a weld image into a pre-trained first diagnostic model and input the welding condition data into a pre-trained second diagnostic model; and outputting a final diagnostic result for the welded portion based on one or more of a first diagnostic result from the first diagnostic model and a second diagnostic result from the second diagnostic model.

The weld image may include one or more images of the welded portion of an electrode tab captured after welding is completed.

The welding condition data may include one or more of welding current data, welding voltage data, dynamic resistance data, and welding device output voltage data.

The first diagnostic model may be configured to output one of normal, over-welding, and under-welding as a first diagnostic result when the weld image is input, and the second diagnostic model is configured to output one of normal, over-welding, and under-welding as a second diagnostic result when the welding condition data is input.

The outputting of the final diagnostic result for the welded portion may include identifying the first diagnostic result by the first diagnostic model; and outputting the final diagnostic result as over-welding, regardless of the second diagnostic result, if the first diagnostic result is over-welding.

The outputting of the final diagnostic result for the welded portion may include identifying the first diagnostic result by the first diagnostic model; and deriving the final diagnostic result based on the first diagnostic result and the second diagnostic result, if the first diagnostic result is normal or under-welding.

The deriving of the final diagnostic result may include applying a predefined first weight to the first diagnostic result and a predefined second weight to the second diagnostic result; and determining the final diagnostic result based on a sum of the first diagnostic result to which the first weight is reflected and the second diagnostic result to which the second weight is reflected.

According to another embodiment of the present disclosure, a welding inspection system may include an imaging device configured to generate one or more weld images of a welded portion; a welding monitoring apparatus configured to generate welding condition data during a welding process; and a welding inspection apparatus configured to inspect the welded portion using a weld image and the welding condition data.

Here, the welding inspection apparatus may input the weld image into a pre-trained first diagnostic model and input the welding condition data into a pre-trained second diagnostic model; and output a final diagnostic result for the welded portion based on one or more of a first diagnostic result from the first diagnostic model and a second diagnostic result from the second diagnostic model.

### [Advantageous Effects]

According to embodiments of the present disclosure, the diagnostic accuracy for a welded portion can be further improved.

### [Brief Description of the Drawings]

FIG. 1 is a block diagram of a welding inspection system according to embodiments of the present invention.
FIG. 2 is a block diagram of a welding inspection apparatus and a diagnostic model generation apparatus according to embodiments of the present invention.
FIG. 3 illustrates examples of weld images by defect type according to embodiments of the present invention.
FIG. 4 illustrates an example of welding condition data according to embodiments of the present invention.
FIG. 5 illustrates an operational flowchart of a welding inspection method according to an embodiment of the present invention.
FIG. 6 is an operational flowchart of a welding inspection method according to another embodiment of the present invention.
FIG. 7 is an operational flowchart illustrating a method for determining a final diagnostic result according to embodiments of the present invention.
FIG. 8 is a block diagram of a welding inspection apparatus according to embodiments of the present invention.

10: welding target
20: welding device
100: welding inspection system
110: imaging device
120: welding monitoring apparatus
130: welding inspection apparatus
200: diagnostic model generation apparatus
800: welding inspection apparatus

### [Best Modes for Practicing the Disclosure]

The present invention may be modified in various forms and have various embodiments, and specific embodiments thereof are shown by way of example in the drawings and will be described in detail below. It should be understood, however, that there is no intent to limit the present invention to the specific embodiments, but on the contrary, the present invention is to cover all modifications, equivalents, and alternatives falling within the spirit and technical scope of the present invention. Like reference numerals refer to like elements throughout the description of the figures.

It will be understood that, although the terms such as first, second, A, B, and the like may be used herein to describe various elements, these elements should not be limited by these terms. These terms are only used to distinguish one element from another. For example, a first element could be termed a second element, and, similarly, a second element could be termed a first element, without departing from the scope of the present invention. As used herein, the term "and/or" includes combinations of a plurality of associated listed items or any of the plurality of associated listed items.

It will be understood that when an element is referred to as being "coupled" or "connected" to another element, it can be directly coupled or connected to the other element or an intervening element may be present. In contrast, when an element is referred to as being "directly coupled" or "directly connected" to another element, there is no intervening element present.

The terms used herein is for the purpose of describing specific embodiments only and are not intended to limit the present invention. As used herein, the singular forms "a", "an" and "the" are intended to include the plural forms as well, unless the context clearly indicates otherwise. It will be further understood that the terms "comprises", "comprising", "includes", "including" and/or "having", when used herein, specify the presence of stated features, integers, steps, operations, constitutional elements, components and/or combinations thereof, but do not preclude the presence or addition of one or more other features, integers, steps, operations, constitutional elements, components, and/or combinations thereof.

Unless otherwise defined, all terms used herein, including technical and scientific terms, have the same meanings as commonly understood by one skilled in the art to which the present invention belongs. It will be further understood that terms, such as those defined in commonly used dictionaries, should be interpreted as having meanings that are consistent with their meanings in the context of the relevant art and will not be interpreted in an idealized or overly formal sense unless expressly so defined herein.

Hereinafter, exemplary embodiments of the present invention will be described in detail with reference to the accompanying drawings.

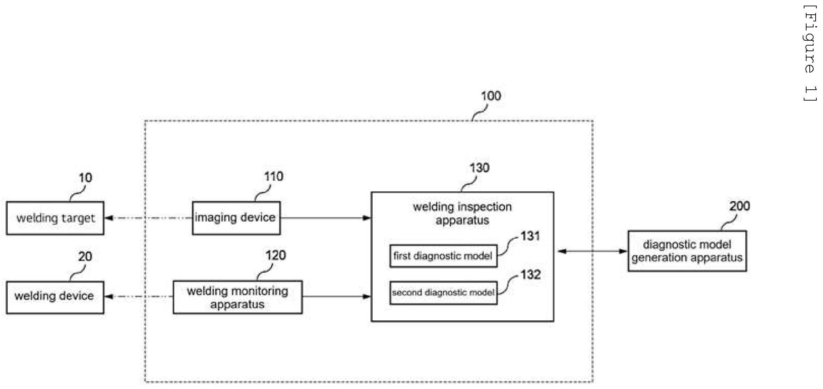

FIG. 1 is a block diagram of a welding inspection system according to embodiments of the present invention.

The battery welding inspection system 100 according to embodiments of the present invention may diagnose defects in a welded portion (or area) of a welding target 10.

The welding target 10 may be a battery and the welded portion may refer to at least a part of an electrode tab. However, the welding inspection system 100 according to embodiments of the present invention may perform welding inspections on various objects other than batteries, and the scope of the present invention is not limited to the type, size, or shape of the welding target 10.

The welding device 20 may weld a specific portion of the welding target 10. For example, the welding device 20 may weld the lower inner surface of a battery can and the electrode tab of an electrode assembly.

The welding device 20 may include a first welding rod connected to the positive electrode of a power supply unit and a second welding rod connected to the negative electrode of the power supply unit. Here, the first welding rod may contact one surface of a weld area and the second welding rod may contact another surface of the weld area. When power is supplied by a power supply, the weld area may be heated and welded.

The battery welding inspection system 100 may include an imaging device 110, a welding monitoring apparatus 120, and a welding inspection apparatus 130.

The imaging device 110 may be a device that photographs a welded portion and generates a weld image. For example, the imaging device 110 may be a vision sensing device including an image sensor.

The imaging device 110 may be positioned on the upper or lower surface of a weld area and may capture a welded portion after the welding operation on the welding target 10 is completed. For example, the imaging device 110 may capture a welded portion of an electrode tab after welding is completed to generate a weld image.

The imaging device 110 may be connected to the welding inspection apparatus 130 via a network and may transmit the generated weld image to the welding inspection apparatus 130.

The welding monitoring apparatus 120 may be a device that measures one or more of the condition of the welding device and the condition of the welded portion during welding of the welding target 10.

The welding monitoring apparatus 120 may generate welding condition data measured during the welding process. Here, the welding condition data may include one or more of welding current data, welding voltage data, dynamic resistance data, and welding device output voltage data.

The welding current data may refer to time-series data indicating values of current applied through the first and second welding rods and the welding voltage data may refer to time-series data indicating values of voltage applied through the first and second welding rods. In addition, dynamic resistance data may refer to time-series data indicating values of the resistance of the welded portion that changes during the welding process and the output voltage data of the welding device may refer to time-series data indicating values of voltage output from a power supply of the welding device.

The welding monitoring apparatus 120 may be connected to the welding inspection apparatus 130 via a network and may transmit the generated welding condition data to the welding inspection apparatus 130.

The welding inspection apparatus 130 may be a device that diagnoses whether a welded portion is defective. Here, the welding inspection apparatus 130 may diagnose whether a welded portion is defective using the weld image generated by the imaging device 110 and the welding condition data generated by the welding monitoring apparatus 120.

The welding inspection apparatus 130 may determine whether the welded portion is defective, and if so, the type of defect (over-welding or under-welding). For example, the welding inspection apparatus 130 may output one of normal, over-welding, and under-welding defects as a diagnostic result for the welded portion.

The welding inspection apparatus 130 may diagnose whether the welded portion has a defect using a predefined machine learning-based diagnostic model. Here, the welding inspection apparatus 130 may diagnose whether the welded portion has a defect using a first diagnostic model 131 that has been pre-trained using weld images as learning data, and a second diagnostic model 132 that has been pre-trained using welding condition data as learning data.

In more detail, the welding inspection apparatus 130 may input a weld image into the first diagnostic model 131 to obtain the diagnostic result output from the first diagnostic model 131, and inputs welding condition data into the second diagnostic model 132 to obtain the diagnostic result output from the second diagnostic model 132. Here, the first diagnostic model 131 and the second diagnostic model 132 may output one of the following diagnostic results: normal, over-welding defect, and under-welding defect.

Thereafter, the welding inspection apparatus 130 may output a final diagnostic result for the welded portion based on one or more of the first and second diagnostic results.

For example, if the first diagnostic result is over-welding, the welding inspection apparatus 130 may output the final diagnostic result as over-welding, regardless of the second diagnostic result. In another example, if the first diagnostic result is normal or under-welding, the welding inspection apparatus 130 may output the second diagnostic result as the final diagnostic result.

The diagnostic model generation apparatus 200 may be a device that generates a machine learning-based diagnostic model for welding inspection.

The diagnostic model generation apparatus 200 may generate a first diagnostic model 131 and a second diagnostic model 132 and provide them to the welding inspection apparatus 130.

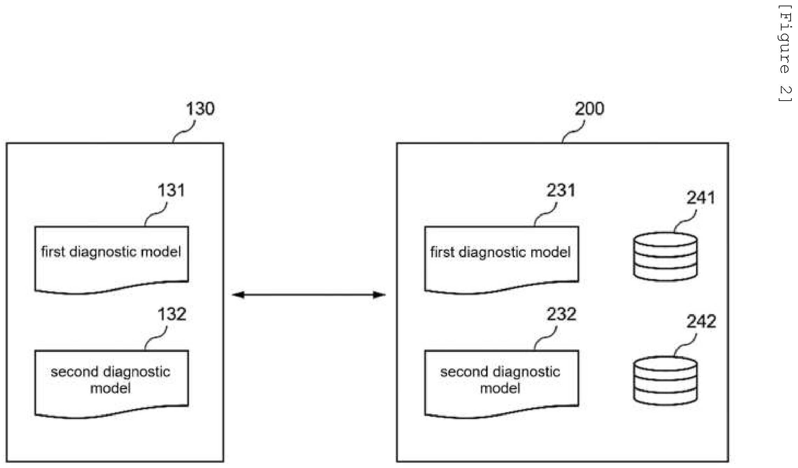

FIG. 2 is a block diagram of a welding inspection apparatus and a diagnostic model generation apparatus according to embodiments of the present invention.

Referring to FIG. 2, the diagnostic model generation apparatus 200 may generate a first diagnostic model 231 and a second diagnostic model 232 and provide them to the welding inspection apparatus 130.

The diagnostic model generation apparatus 200 may train the first diagnostic model 231 and the second diagnostic model 232 using training data stored in storage devices 241, 242.

The first diagnostic model 231 may be trained using weld images as training data.

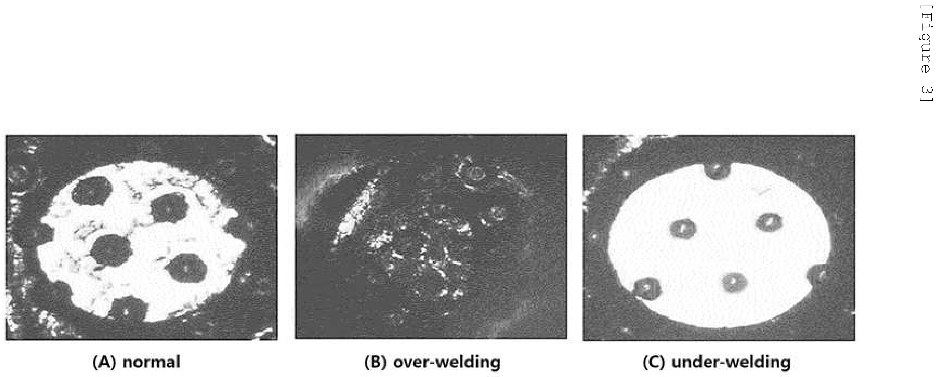

FIG. 3 illustrates examples of weld images by defect type according to embodiments of the present invention. Referring to FIG. 3, if a welded portion is normal, as shown in (A), the weld area appears relatively clean, while light stains may appear in areas other than the welded portion. On the other hand, if the welded portion is over-welded, as in (B), the shape of the weld area may not be clearly visible and the weld image may appear in dark colors overall. Furthermore, if the welded portion is under-welded, as in (C), the weld area may appear very clean and the weld image may appear in bright colors overall.

The first diagnostic model 231 may be predefined based on a neural network-based image classification algorithm, and the diagnostic model generation apparatus 200 may train the first diagnostic model 231 using labeled weld images (e.g., (A), (B), and (C) of FIG. 3) as training data.

The first diagnostic model 231 may output a first diagnostic result including any one of normal, over-welding defect, and under-welding defect. Here, the first diagnostic result may further include a probability value for each result item. For example, the first diagnostic model 231 may calculate probability values (e.g., 3% for normal, 2% for over-welding, and 95% for under-welding) for each of output result items (e.g., normal, over-welding defect, under-welding defect) for the input weld images, determine and output the result item with the highest probability value (e.g., under-welding).

Once the training of the first diagnostic model 231 is complete, the diagnostic model generation apparatus 200 may provide the trained first diagnostic model 231 to the welding inspection apparatus 130.

The second diagnostic model 232 may be trained using welding condition data as training data.

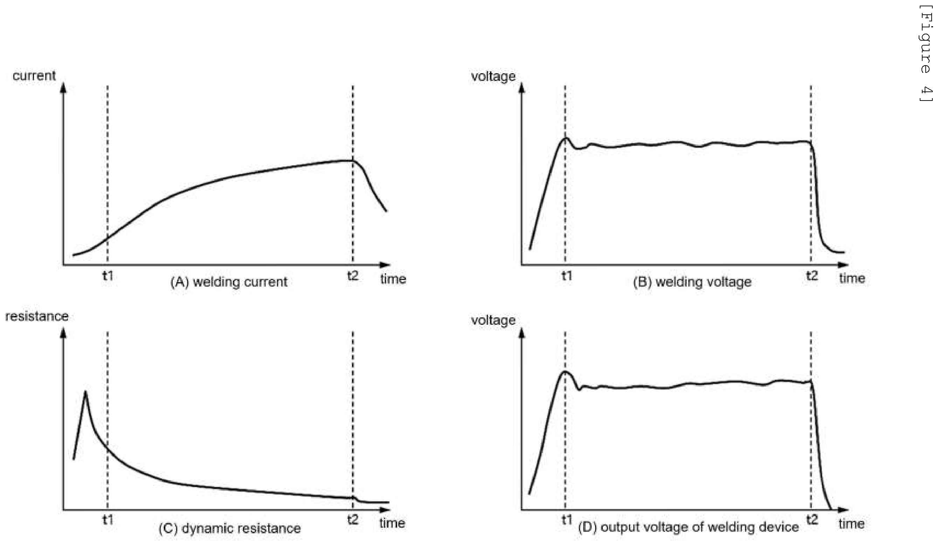

FIG. 4 illustrates an example of welding condition data according to embodiments of the present invention. Referring to FIG. 4, the welding condition data may include one or more of welding current data, welding voltage data, dynamic resistance data, and output voltage data of the welding device.

Here, the welding current data may include time series data representing the current values applied through the first and second welding rods as in (A), and the welding voltage data may include time series data representing the voltage values applied through the first and second welding rods as in (B). Furthermore, the dynamic resistance data may include time series data representing resistance values of a weld portion that change during the welding process as in (C), and the output voltage data of the welding device may include time series data representing the voltage values output from a power supply of a welding device as in (D).

The second diagnostic model 232 may be predefined based on a machine learning-based classification algorithm (e.g., XGB; Extreme Gradient Boosting, etc.), and the diagnostic model generation apparatus 200 may train the second diagnostic model 232 using the welding condition data as learning data.

In embodiments, the second diagnostic model 232 may preprocess welding condition data according to a predefined preprocessing process and train the second diagnostic model 232 using the preprocessed welding condition data as training data. For example, the diagnostic model generation apparatus 200 may calculate an average welding current value, a maximum welding current value, an average welding voltage value, an initial resistance value (a resistance value at time t1), a final resistance value (a resistance value at time t2) in the sections t1 to t2 of FIG. 3, and an average output voltage value of the welding device. Thereafter, the diagnostic model generation apparatus 200 may train the second diagnostic model 232 using the welding condition data including the calculated values as training data.

The second diagnostic model 232 may output a second diagnostic result including any one of normal, over-welding defect, and under-welding defect. Here, the second diagnostic result may further include a probability value for each of the result items. For example, the second diagnostic model 232 may calculate probability values (e.g., 3% for normal, 2% for over-welding, and 95% for under-welding) for each of output result items (e.g., normal, over-welding defect, under-welding defect) for the input weld images, determine and output the result item with the highest probability value (e.g., under-welding).

Once the training of the second diagnostic model 232 is complete, the diagnostic model generation apparatus 200 may provide the trained second diagnostic model 232 to the welding inspection apparatus 130.

The welding inspection apparatus 130 may use the first diagnostic model 131 and the second diagnostic model 132 to diagnose whether a welded portion is defective and determine the type of defect.

Specifically, the welding inspection apparatus 130 may output a final diagnostic result based on one or more of a first diagnostic result output from the first diagnostic model 131 by inputting a weld image generated by the imaging device 110 into the first diagnostic model 131 and a second diagnostic result output from the second diagnostic model 132 by inputting welding condition data generated by the welding monitoring apparatus 120 into the second diagnostic model 132.

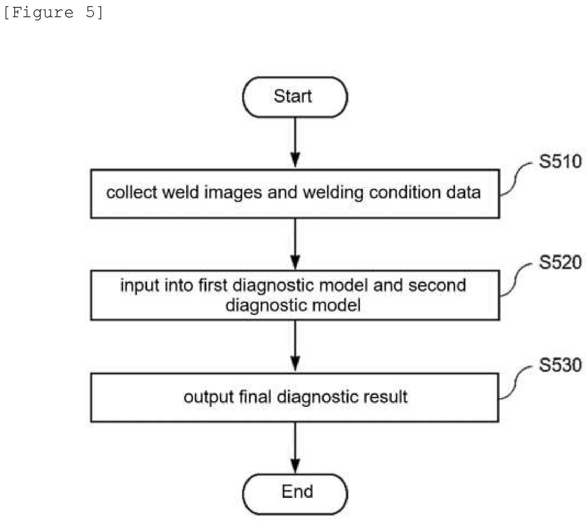

FIG. 5 illustrates an operational flowchart of a welding inspection method according to an embodiment of the present invention.

The welding inspection apparatus may collect one or more weld images photographed of a weld area and welding condition data measured during the welding process (S510). Here, the welding inspection apparatus may receive one or more weld images from an imaging device and the welding condition data from the welding monitoring apparatus.

The weld image may include an image photographed of a welded portion of an electrode tab after the welding process is completed.

The welding condition data may include one or more of welding current data, welding voltage data, dynamic resistance data, and welding device output voltage data.

The welding inspection apparatus may input the weld image into a first diagnostic model to obtain the first diagnostic result output from the first diagnostic model and input the welding condition data into a second diagnostic model to obtain the diagnostic result output from the second diagnostic model (S520).

The first diagnostic model may be defined to output one of normal, over-welding, and under-welding as the first diagnostic result when a weld image is input and the second diagnostic model may be defined to output one of normal, over-welding, and under-welding as the second diagnostic result when welding condition data is input. Here, the welding inspection apparatus may receive the first diagnostic model and second diagnostic model, which have been pre-trained, from the diagnostic model generation apparatus.

The welding inspection apparatus may output a final diagnostic result for the welded portion based on one or more of the first and second diagnostic results (S530).

The first diagnostic model, which is pre-trained using weld images as training data, has a high detection accuracy for over-welding defects. Referring to FIG. 3, the weld image classified as an over-welding defect (B) appears overall in a dark color, clearly distinguishing it from the weld images classified as normal (A) and under-welding defect (C). Accordingly, the first diagnostic model has a relatively high detection accuracy for over-welding defects compared to the second diagnostic model.

Considering these characteristics of the first diagnostic model, the welding inspection apparatus may output the final diagnostic result as over-welding, regardless of the second diagnostic result, if the first diagnostic result indicates over-welding. If the first diagnostic result indicates normal or under-welding, the welding inspection apparatus may output the second diagnostic result as the final diagnostic result.

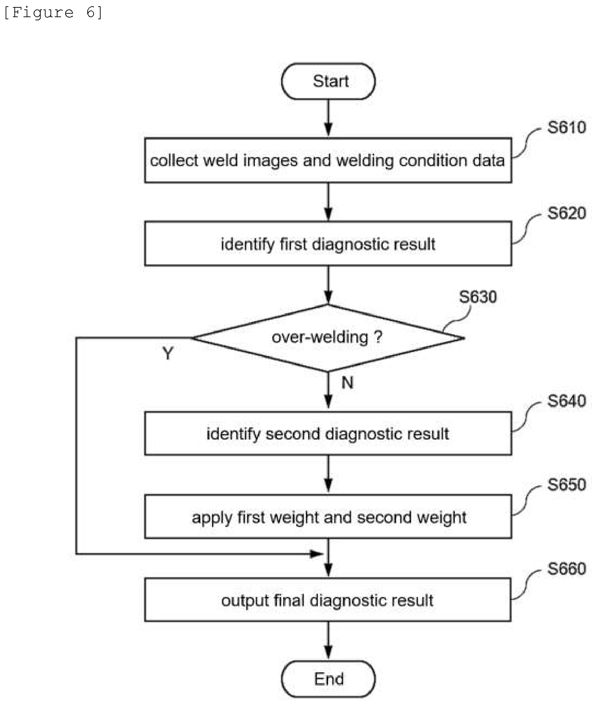

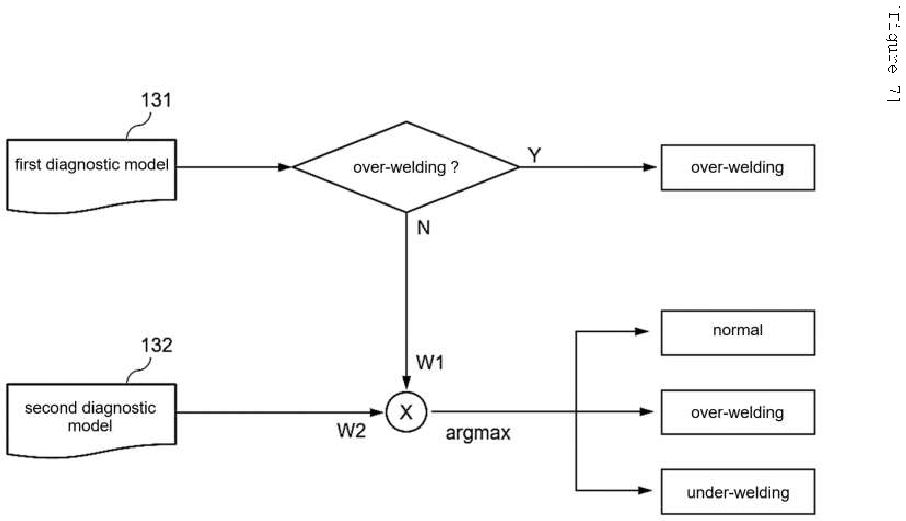

FIG. 6 is an operational flowchart of a welding inspection method according to another embodiment of the present invention and FIG. 7 is an operational flowchart illustrating a method for determining a final diagnostic result according to embodiments of the present invention.

The welding inspection apparatus may collect a weld image photographing a welded portion and welding condition data measured during a welding process (S610). Here, the welding inspection apparatus may receive the weld image from an imaging device and the welding condition data from a welding monitoring apparatus.

The welding inspection apparatus may input one or more weld images into the first diagnostic model 131 and identify a first diagnostic result output from the first diagnostic model (S620).

If the first diagnostic result is over-welding (Y in S630), the welding inspection apparatus may output the final diagnostic result as over-welding (S660). In other words, considering that the first diagnostic model 131 has a high over-welding detection accuracy in case the first diagnostic model 131 determines over-welding, the welding inspection apparatus may output the final diagnostic result as over-welding, as illustrated in FIG. 7.

If the first diagnostic result is normal or under-welding (N in S630), the welding inspection apparatus may input welding condition data into the second diagnostic model 132 and identify a second diagnostic result output from the second diagnostic model 132 (S640).

Thereafter, the welding inspection apparatus may derive the final diagnostic result based on predefined weights for each of the first and second diagnostic results.

More specifically, the welding inspection apparatus may apply a predefined first weight to the first diagnostic result and a predefined second weight to the second diagnostic result (S650). Here, the sum of the first and second weights is defined as 1, and the second weight may be defined as 0.6 or greater and 0.9 or less.

Thereafter, the welding inspection apparatus may determine and output the final diagnostic result based on the sum of the first diagnostic result reflecting the first weight and the second diagnostic result reflecting the second weight (S660).

For example, if the probability values for each result item are calculated as [Normal 3%, Over-welding 2%, Under-welding 95%] by the first diagnosis model 131, the welding inspection apparatus may reflect a predetermined first weight (W1) to the first diagnostic result (Normal 3*W1%, Over-welding 2*W1%, Under-welding 95*W1%), as illustrated in FIG. 7. Furthermore, if the probability values for each result item are calculated as [Normal 85%, Over-welding 2%, Under-welding 13%] by the second diagnostic model 132, the welding inspection apparatus may reflect a predetermined second weight (W2) to the second diagnostic result (Normal 85*W2%, Over-welding 2*W2%, Under-welding 13*W2%), as illustrated in FIG. 7. Afterwards, the welding inspection apparatus may sum the first diagnostic result to which the first weight is reflected and the second diagnostic result to which the second weight is reflected (Normal 3*W1+85*W2%, Over-welding 2*W1+2*W2%, Under-welding 95*W1+13*W2%) and determine the result item (argmax) with the highest probability value as the final diagnostic result.

To derive an optimal range of weights according to embodiments of the present invention, a comparative test was performed, and the results are as follows.

**[table 1]**

| Weight | | Accuracy | | | |
|---|---|---|---|---|---|
| W1 | W2 | Total | normal | over-welding | under-welding |
| 1 | 0 | 0.978 | 0.994 | 0.839 | 0.933 |
| 0.9 | 0.1 | 0.978 | 0.994 | 0.844 | 0.933 |
| 0.8 | 0.2 | 0.98 | 0.995 | 0.853 | 0.933 |
| 0.7 | 0.3 | 0.981 | 0.995 | 0.868 | 0.933 |
| 0.6 | 0.4 | 0.982 | 0.995 | 0.877 | 0.932 |
| 0.5 | 0.5 | 0.984 | 0.995 | 0.896 | 0.932 |
| 0.4 | 0.6 | 0.985 | 0.994 | 0.911 | 0.932 |
| **0.3** | **0.7** | **0.987** | **0.993** | **0.945** | **0.933** |
| **0.2** | **0.8** | **0.988** | **0.992** | **0.962** | **0.933** |
| **0.1** | **0.9** | **0.989** | **0.992** | **0.954** | **0.933** |
| 0 | 1 | 0.989 | 0.994 | 0.935 | 0.932 |

Referring to Table 1 above, it can be understood that the overall detection accuracy and the detection accuracy for over-welding are high, when the first weight (W1) applied to the first diagnostic result is defined as 0.1 or greater and 0.3 or less, and the second weight (W2) reflected in the second diagnostic result is defined as 0.7 or greater and 0.9 or less.

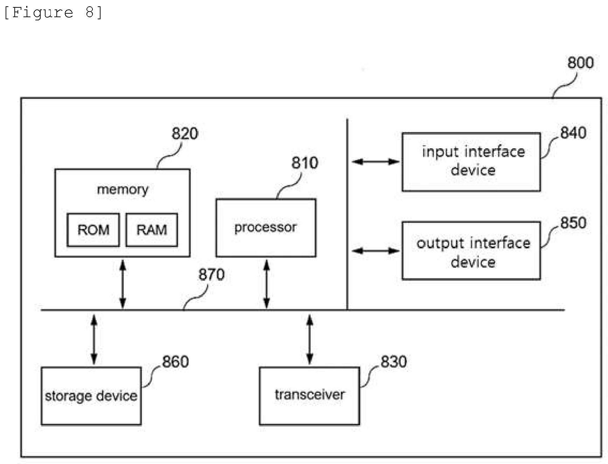

FIG. 8 is a block diagram of a welding inspection apparatus according to embodiments of the present invention.

The welding inspection apparatus 800 according to embodiments of the present invention may be connected to an imaging device that generates a weld image of a welded portion; and a welding monitoring apparatus that generates welding condition data during a welding process.

The welding inspection apparatus 800 may include at least one processor 810, a memory 820 that stores at least one instruction executed by the processor, and a transceiver 830 that is connected to a network and performs communication.

The at least one instruction may include an instruction to collect one or more weld images of a welded portion, and welding condition data measured during a welding process; an instruction to input a weld image into a pre-trained first diagnostic model and input the welding condition data into a pre-trained second diagnostic model; and an instruction to output a final diagnostic result for the welded portion based on one or more of a first diagnostic result from the first diagnostic model and a second diagnostic result from the second diagnostic model.

The weld image may include one or more images of the welded portion of an electrode tab captured after welding is completed.

The welding condition data may include one or more of welding current data, welding voltage data, dynamic resistance data, and welding device output voltage data.

The first diagnostic model may be configured to output one of normal, over-welding, and under-welding as a first diagnostic result when the weld image is input, and the second diagnostic model is configured to output one of normal, over-welding, and under-welding as a second diagnostic result when the welding condition data is input.

The instruction to output the final diagnostic result for the welded portion may include an instruction to identify the first diagnostic result by the first diagnostic model; and an instruction to output the final diagnostic result as over-welding, regardless of the second diagnostic result, if the first diagnostic result is over-welding.

The instruction to output the final diagnostic result for the welded portion may include an instruction to identify the first diagnostic result by the first diagnostic model; and an instruction to derive the final diagnostic result based on the first diagnostic result and the second diagnostic result, if the first diagnostic result is normal or under-welding.

The instruction to derive the final diagnostic result may include an instruction to apply a predefined first weight to the first diagnostic result and a predefined second weight to the second diagnostic result; and an instruction to determine the final diagnostic result based on a sum of the first diagnostic result to which the first weight is reflected and the second diagnostic result to which the second weight is reflected.

The sum of the first weight and the second weight may be defined as 1, and the second weight may be defined as 0.6 or greater and 0.9 or less.

Meanwhile, the welding inspection apparatus 800 according to embodiments of the present invention may further include an input interface device 840, an output interface device 850, a storage device 860, etc. Respective components included in the welding inspection apparatus 800 may be connected by a bus 870 and can communicate with each other. The storage device 860 may store one or more diagnostic models, one or more defect detection models, and one or more abnormality detection models.

Here, the processor 810 may mean a central processing unit (CPU), a graphics processing unit (GPU), or a dedicated processor on which methods according to embodiments of the present invention are performed. Furthermore, the memory may include at least one of a volatile/transitory storage medium and a non-volatile/non-transitory storage medium. For example, the memory may include at least one of a read-only memory (ROM) and random access memory (RAM), and may include an Electrically Erasable Programmable Read-only Memory (EEPROM).

The operations of the method according to the embodiments of the present invention may be implemented as a computer-readable program or code on a computer-readable recording medium. The computer-readable recording medium includes all types of recording devices in which data readable by a computer system is stored. In addition, the computer-readable recording medium may be distributed in a network-connected computer system to store and execute computer-readable programs or codes in a distributed manner.

The operations of the method according to embodiments of the present invention may be implemented in various forms related to programs, such as a computer program or code itself, or a computer program product.

Furthermore, the computer-readable recording medium may include one or more of a volatile/transitory recording medium and a non-volatile/non-transitory recording medium.

In addition, the computer-readable recording medium may include hardware devices specially configured to store and execute program instructions, such as ROM, RAM, flash memory, and may include, for example, various types of servers located on a network. The program instructions may include not only machine language codes, such as those created by a compiler, but also high-level language codes that can be executed by a computer using an interpreter.

Although some aspects of the invention have been described in the context of the apparatus, it may also represent a description according to a corresponding method, wherein a block or apparatus corresponds to a method step or feature of a method step. Similarly, aspects described in the context of a method may also represent a feature of a corresponding block or item or a corresponding apparatus. Some or all of the method steps may be performed by (or using) a hardware device, such as, for example, a microprocessor, a programmable computer, or an electronic circuit. In some embodiments, one or more of the most important method steps may be performed by such an apparatus.

In the forgoing, the present invention has been described with reference to the exemplary embodiment of the present invention, but those skilled in the art may appreciate that the present invention may be variously corrected and changed within the range without departing from the spirit and the area of the present invention described in the appending claims.

## Claims

1. A welding inspection apparatus comprising:
at least one processor; and
a memory configured to store at least one instruction executed by the at least one processor,
wherein the at least one instruction includes:
an instruction to collect one or more weld images of a welded portion, and welding condition data measured during a welding process;
an instruction to input a weld image into a pre-trained first diagnostic model and input the welding condition data into a pre-trained second diagnostic model; and
an instruction to output a final diagnostic result for the welded portion based on one or more of a first diagnostic result from the first diagnostic model and a second diagnostic result from the second diagnostic model.

2. The welding inspection apparatus of claim 1, wherein the weld image includes:
one or more images of the welded portion of an electrode tab captured after welding is completed.

3. The welding inspection apparatus of claim 1, wherein the welding condition data includes one or more of welding current data, welding voltage data, dynamic resistance data, and welding device output voltage data.

4. The welding inspection apparatus of claim 1, wherein the first diagnostic model is configured to output one of normal, over-welding, and under-welding as a first diagnostic result when the weld image is input, and
the second diagnostic model is configured to output one of normal, over-welding, and under-welding as a second diagnostic result when the welding condition data is input.

5. The welding inspection apparatus of claim 4, wherein the instruction to output the final diagnostic result for the welded portion includes:
an instruction to identify the first diagnostic result by the first diagnostic model; and
an instruction to output the final diagnostic result as over-welding, regardless of the second diagnostic result, if the first diagnostic result is over-welding.

6. The welding inspection apparatus of claim 4, wherein the instruction to output the final diagnostic result for the welded portion includes:
an instruction to identify the first diagnostic result by the first diagnostic model; and
an instruction to derive the final diagnostic result based on the first diagnostic result and the second diagnostic result, if the first diagnostic result is normal or under-welding.

7. The welding inspection apparatus of claim 6, wherein the instruction to derive the final diagnostic result includes:
an instruction to apply a predefined first weight to the first diagnostic result and a predefined second weight to the second diagnostic result; and
an instruction to determine the final diagnostic result based on a sum of the first diagnostic result to which the first weight is reflected and the second diagnostic result to which the second weight is reflected.

8. The welding inspection apparatus of claim 7, wherein the sum of the first weight and the second weight is defined as 1, and
the second weight is defined as 0.6 or greater and 0.9 or less.

9. A welding inspection method performed by a welding inspection apparatus, the method comprising:
collecting one or more weld images of a welded portion, and welding condition data measured during a welding process;
inputting a weld image into a pre-trained first diagnostic model and input the welding condition data into a pre-trained second diagnostic model; and
outputting a final diagnostic result for the welded portion based on one or more of a first diagnostic result from the first diagnostic model and a second diagnostic result from the second diagnostic model.

10. The method of claim 9, wherein the weld image includes:
one or more images of the welded portion of an electrode tab captured after welding is completed.

11. The method of claim 9, wherein the welding condition data includes one or more of welding current data, welding voltage data, dynamic resistance data, and welding device output voltage data.

12. The method of claim 9, wherein the first diagnostic model is configured to output one of normal, over-welding, and under-welding as a first diagnostic result when the weld image is input, and
the second diagnostic model is configured to output one of normal, over-welding, and under-welding as a second diagnostic result when the welding condition data is input.

13. The method of claim 12, wherein the outputting of the final diagnostic result for the welded portion includes:
identifying the first diagnostic result by the first diagnostic model; and
outputting the final diagnostic result as over-welding, regardless of the second diagnostic result, if the first diagnostic result is over-welding.

14. The method of claim 12, wherein the outputting of the final diagnostic result for the welded portion includes:
identifying the first diagnostic result by the first diagnostic model; and
deriving the final diagnostic result based on the first diagnostic result and the second diagnostic result, if the first diagnostic result is normal or under-welding.

15. The method of claim 14, wherein the deriving of the final diagnostic result includes:
applying a predefined first weight to the first diagnostic result and a predefined second weight to the second diagnostic result; and
determining the final diagnostic result based on a sum of the first diagnostic result to which the first weight is reflected and the second diagnostic result to which the second weight is reflected.

16. A welding inspection system comprising:
an imaging device configured to generate one or more weld images of a welded portion;
a welding monitoring apparatus configured to generate welding condition data during a welding process; and
a welding inspection apparatus configured to inspect the welded portion using a weld image and the welding condition data,
wherein the welding inspection apparatus inputs the weld image into a pre-trained first diagnostic model and input the welding condition data into a pre-trained second diagnostic model; and outputs a final diagnostic result for the welded portion based on one or more of a first diagnostic result from the first diagnostic model and a second diagnostic result from the second diagnostic model.
